# NEUE EUROPÄISCHE PATENTSCHRIFT

(11) **EP 0 654 054 B2**
(45) Veröffentlichungstag und Bekanntmachung des Hinweises auf die Entscheidung über den Einspruch: **07.12.2005**
(45) Hinweis auf die Patenterteilung: 26.06.1996
(21) Anmeldenummer: 93915976.0
(22) Anmeldetag: 22.07.1993
(51) Int. Cl.: C08G 18/48, C08J 9/14, C08L 75/04

(54) **Verwendung von aktive Wasserstoffatome aufweisenden Verbindungen**
Use of compounds comprising active hydrogen atoms
Emploi de composants comprenant d'atomes de hydrogène actifs

(30) Priorität: 04.08.1992 DE 4225760
(43) Veröffentlichungstag der Anmeldung: 24.05.1995
(73) Patentinhaber: BAYER AG, 51368 Leverkusen (DE)
(72) Erfinder: LAMBERTS, Wilhelm, D-51373 Leverkusen (DE); EISEN, Norbert, D-50937 Köln (DE); THOMPSON-COLON, James, D-42699 Solingen (DE)
(86) Internationale Anmeldenummer: PCT/EP1993/001959
(87) Internationale Veröffentlichungsnummer: WO 1994/003515

(56) Entgegenhaltungen:
- EP-A- 0 344 537
- EP-A- 0 351 614
- EP-A- 0 364 854
- EP-A- 0 421 269
- EP-A- 0 432 672
- EP-A- 0 450 308
- EP-A- 0 477 920
- EP-A- 0 507 214
- Derwent Publications Ltd., London, GB; AN 91-344720[47] & JP,A,3 231 916 (MITSUI TOATSU CHEM. INC.) 15. Oktober 1991
- CHEMICAL ABSTRACTS, vol. 112, no. 10, 5. März 1990, Columbus, Ohio, US; abstract no. 78784j, AOYANAGI MINAKO ET AL 'Manufacture of polyurethane foams with halocarbon-hydrocarbon blowing agents' & JP,A,1 234 432 (ASAHI GLASS CO. LTD.) 19. September 1989

## Beschreibung

Polyurethan-Hartschaumstoffe finden seit vielen Jahren aufgrund ihrer hervorragenden Wärmedämmeigenschaften Anwendung bei der Dämmung von Kühl- und Gefriergeräten, von industriellen Anlagen, Tanklagern, Rohrleitungen, im Schiffsbau sowie bei zahlreichen Dämmaufgaben in der Bauindustrie.

Die Wärmeleitfähigkeit des Polyurethan-Hartschaumstoffes, der weitgehend geschlossene Zellen aufweist, ist in starkem Maße abhängig von der Art des verwendeten Treibmittels bzw. Zellgases. Als besonders geeignet hatten sich hierzu die perhalogenierten Fluorchlorkohlenwasserstoffe (FCKW) erwiesen, insbesondere Trichlorfluormethan (R11), welches eine besonders geringe Wärmeleitfähigkeit aufweist. Diese Stoffe sind chemisch inert, ungiftig und nicht brennbar. Die perhalogenierten Fluorchlorkohlenwasserstoffe gelangen jedoch infolge ihrer hohen Stabilität in die Stratosphäre, wo sie aufgrund ihres Gehaltes an Chlor zum Abbau des dort vorhandenen Ozons beitragen sollen (z.B. Molina, Rowland Mature 249 (1974) 810; Erster Zwischenbericht der Bundestags-Enquete-Kommision "Vorsorge zum Schutz der Erdatmosphäre" vom 02.11.1988, Deutscher Bundestag, Referat Öffentlichkeitsarbeit, Bonn).

Es wurde bereits vorgeschlagen (s. z.B. EP-PS 344 537, US-PS 4 931 482), als Treibmitel teilfluorierte Kohlenwasserstoffe (Hydrofluoralkane), die noch mindestens eine Kohlenstoff-Wasserstoff-Bindung aufweisen, zu verwenden.

Stoffe dieser Verbindungsklasse enthalten keine Chloratome mehr und weisen infolgedessen einen ODP-Wert (Ozone Depletion Potential) von Null auf. (Zum Vergleich: R11 : ODP = 1)

Typische Vertreter dieser Substanzklasse sind z.B. 1,1,1,4,4,4-Hexafluorbutan (R356) oder 1,1,1,2-Tetrafluorethan (R134a).

Weiterhin ist bekannt, Kohlenwasserstoffe wie n- oder i-Pentan, 2,2-Dimethylbutan, Cyclopentan oder Cyclohexan als Treibmittel zu verwenden.

In der EP-A-364 854 wird ein Verfahren zur Herstellung weicher Polyurethan-Formkörper mit einer verdichteten Randzone und einem zelligen Kern (Integral-Formschaumstoffe) unter Verwendung niedrigsiedender aliphatischer und/oder cycloaliphatischer Kohlenwasserstoffe mit 4 bis 8 Kohlenstoffatomen als Treibmittel beschrieben. Die dabei eingesetzten Polyolverbindungen besitzen zweckmäßigerweise ein Molekulargewicht im Bereich von 400 bis 8.000, Keine Angaben finden sich in dieser Schrift zur Herstellung von für Wärmedämmzwecke geeigneten Polyurethan-Hartschaumstoffe.

In der EP-A-421 269 wird ein Verfahren zur Herstellung von Polyurethan-Hartschaumstoffen offenbart, bei dem als Treibmittel Cyclopentan und/oder Cyclohexan und mindestens eine mit Cyclopentan und/oder Cyclohexan homogen mischbare Verbindung, ausgewählt aus der Gruppe der Alkane, Cycloalkane mit maximal 4 Kohlenstoffatomen, Dialkylether, Cycloalkylenether und Fluoralkane, eingesetzt wird. Als Polyolverbindungen werden Polyhydroxyverbindungen mit einer Funktionalität von 2 bis 8 und einer Hydroxylzahl von 150 bis 850 genannt.

Reine, d.h. unsubstituierte, Kohlenwasserstoffe sind aufgrund ihres chemischen Aufbaus sehr unpolar und mischen sich insofern schlecht mit den für die Hartschaumstoffherstellung gebräuchlichen Polyolen. Dies ist aber eine für die übliche Herstellungstechnik wichtige Voraussetzung, bei der die Polyol- und Isocyanatkomponenten maschinell miteinander vermischt werden.

Die Polyolkomponente enthält außer den reaktiven Polyether- oder Polyesterpolyolen auch das Treibmittel und die Hilfsstoffe wie Aktivatoren, Emulgatoren und Stabilisatoren in gelöster Form. Auf der Polyolseite liegt also ein einphasiges Gemisch vor.

Die geringe Löslichkeit der reinen Kohlenwasserstoffe führt bei äquimolarem Austausch von herkömmlichen Treibmitteln wie z.B. R11 gegen sie in handelsüblichen Formulierungen oft zur Bildung zweier Phasen, die sich herkömmlich nicht mehr verarbeiten lassen.

Aufgabe der Erfindung war, eine Polyolkomponente zu verwenden, in der die Löslichkeit von reinen Kohlenwasserstoffen erhöht ist, so daß sie als einphasiges Gemisch in der Polyolkomponente vorliegen.

Überraschenderweise wurde gefunden, daß in den erfindungsgemäßen Polyoten, die ein tertiäres Stickstoffatom enthalten, die Löslichkeit von reinen Alkanen stark erhöht wird.

Gegenstand der Erfindung ist die Verwendung von
1. mindestens zwei gegenüber Isocyanaten aktive Wasserstoffatome aufweisenden Verbindungen vom Molekulargewicht 150 bis 1.500, die im Molekül ein tertiäres Stickstoffatom aufweisen, und durch Umsetzung von Triethanolamin oder Ethylendiamin mit Propylenoxid und/oder Ethylenoxid erhalten worden sind zur Erhöhung der Löslichkeit von reinen Kohlenwasserstorren in der Polyolkomponente bei der Herstellung von harten Polyurethanschaumstoffen durch Umsetzung mit
2. Polyisocyanaten in Gegenwart von
3. reinen Kohlenwasserstoffen als Treibmittel sowie gegebenenfalls in Gegenwart von
4. weiteren an sich bekannten Hilfs- und Zusatzstoffen.

Für die Herstellung von harten Polyurethanschaumstoffen werden erfindungsgemäß verwendet:
1. Verbindungen mit mindestens zwei gegenüber Isocyanaten reaktionsfähigen Wasserstoffatomen und einem Molekulargewicht in der Regel von 150 bis 1 500, die ein tertiäres Stickstoffatom im Molekül aufweisen ("PolyolKomponente") und durch Umsetzung von Triethanolamin oder Ethylendiamin mit Propylenoxid und/oder Ethylenoxid erhalten worden sind. Hierunter versteht man neben Aminogruppen, Thiolgruppen oder Carboxylgruppen aufweisenden Verbindungen vorzugsweise Hydroxylgruppen aufweisende Verbindungen, insbesondere 2 bis 8 Hydroxylgruppen aufweisende Verbindungen, speziell solche vom Molekulargewicht 200 bis 1200, vorzugsweise 250 bis 500, z.B. derartige, mindestens 2, vorzugsweise 2 bis 6, Hydroxylgruppen aufweisende Polyether und/oder Polyester, die an sich bekannt sind.
   Erfindungsgemäß bevorzugt sind Polyether, die ein Molekulargewicht von 250 bis 500 aufweisen.
   Bevorzugt sind speziell Polyether, die durch Umsetzung von Triethanolamin oder Ethylendiamin mit Ethylenoxid und/oder Propylenoxid erhalten worden sind.
   Anteilmäßig (bis zu 50 Gew.-%, bezogen auf Komponente 2) können erfindungsgemäß auch andere Verbindungen mit mindestens zwei gegenüber Isocyanaten reaktiven Wasserstoffatomen und einem Molekulargewicht von 62 bis 10.000 wie die an sich bekannten Polyether und Polyester sowie Kettenverlängerungs- und Vernetzungsmittel (vergl. DE-OS 2 832 253, Seiten 11 bis 20) mitverwendet werden.
   Ausgangskomponenten für die Herstellung der harten Polyurethanschaumstoffe sind ferner
2. Aliphatische, cycloaliphatische, araliphatische, aromatische und heterocyclische Polyisocyanate, wie sie z.B. von W. Siefken in Justus Liebigs Annalen der Chemie, 562 Seiten 75 bis 136, beschrieben werden, beispielsweise solche der Formel,

   Q(NCO)ₙ,

   in der
   n 2 bis 4, vorzugsweise 2 bis 3, und
   Q einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen oder einen araliphatischen Kohlenwasserstoffrest mit 8 bis 15, vorzugsweise 8 bis 13 C-Atomen bedeuten,
   z.B. solche Polyisocyanate, wie sie in der DE-OS 2 832 253, Seiten 10 bis 11, beschrieben werden.
   Besonders bevorzugt werden in der Reoel die technisch leicht zugänglichen Polyisocyanate, z.B. das 2,4- und 2,6-Toluylendiisocyanat sowie beliebige Gemische dieser Isomeren ("TDI"), Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Hamstoffgruppen oder Biuretgruppen aufweisende Polyisocyanate ("modifizierte Polyisocyanate"), insbesondere solche modifizierten Polyisocyanate, die sich vom 2,4-und/oder 2,6-Toluylendiisocyanat bzw. vom 4,4'-und/oder 2,4'-Diphenylmethandiisocyanat ableiten.
3. Als Treibmittel werden reine Kohlenwasserstoffe verwendet, vorzugsweise n- oder i-Pentan oder Cyclopentan.
   Als zusätzliche Treibmittel können Wasser und/oder andere leicht flüchtige organische Verbindungen mitverwendet werden.
4. Gegebenenfalls mitverwendet werden weitere an sich bekannte Hilfs- und Zusatzstoffe, wie Katalysatoren, Emulgatoren, Flammschutzmittel und Schaumstabilisatoren.
   Als Emulgatoren sind solche auf Basis alkoxilierter Fettsäuren und höherer Alkohole bevorzugt. Als Schaumstabilisatoren kommen vor allem Polyethersiloxane, speziell wasserlösliche Vertreter, in Frage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in den US-PS 2 834 748, 2 917 480 und 3 629 308 beschrieben. Die aus der Polyurethanchemie an sich bekannten Katalysatoren wie tert.-Amine und/oder metallorganische Verbindungen können mitverwendet werden.

Als Flammschutzmittel sei beispielsweise Trikresylphosphat genannt.

Auch Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide, können mitverwendet werden.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113; beschrieben.

### Durchführung der Erfindung:

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solche, die in der US-PS 2 764 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z.B. auf den Seiten 121 bis 205 beschrieben.

Erfindungsgemäß wird im Kennzahlbereich von 100 bis 300, vorzugsweise 100 bis 130 gearbeitet.

Bei der Schaumstoffherstellung kann erfindungsgemäß die Verschäumung auch in geschlossenen Formen durchgeführt werden. Dabei wird das Reaktionsgemisch in eine Form eingetragen. Als Formmaterial kommt Metall, z.B. Aluminium, oder Kunststoff, z.B. Epoxidharz, in Frage.

In der Form schäumt das schäumfähige Reaktionsgemisch auf und bildet den Formkörper. Die Formverschäumung kann dabei so durchgeführt werden, daß das Formteil an seiner Oberfläche Zellstruktur aufweist. Sie kann aber auch so durchgeführt werden, daß das Formteil eine kompakte Haut und einen zelligen Kern aufweist. Erfindungsgemäß kann man in diesem Zusammenhang so vorgehen, daß man in die Form so viel schäumfähiges Reaktionsgemisch einträgt, daß der gebildete Schaumstoff die Form gerade ausfüllt. Man kann aber auch so arbeiten, daß man schäumfähiges Reaktionsgemisch in die Form einträgt, als zur Ausfüllung des Forminneren mit Schaumstoff notwendig ist. Im letztgenannten Fall wird somit unter "overcharging" gearbeitet; eine derartige Verfahrensweise ist z.B. aus den US-PS 3 178 490 und 3 182 104 bekannt.

Bei der Formverschäumung werden vielfach an sich bekannte "äußere Trennmittel", wie Siliconöle, mitverwendet. Man kann aber auch sogenannte "innere Trennmittel", gegebenenfalls im Gemisch mit äußeren Trennmitteln, verwenden, wie sie z.B. aus den DE-OS 2 121 670 und 2 307 589 bekanntgeworden sind.

Vorzugsweise werden erfindungsgemäß Kühl- und Kältegeräten ausgeschäumt.

Selbstverständlich können aber auch Schaumstoffe durch Blockverschäumung oder nach dem an sich bekannten Doppeltransportbandverfahren hergestellt werden.

Des weiteren finden die nach der Erfindung erhältlichen Hartschaumstoffe Anwendung z.B. im Bauwesen, sowie für die Dämmung von Fernwärmerohren und Containern.

### Beispiele

100 g einer Polyolmischung, bestehend aus Grundpolyol, Aktivator, Stabilisator und Wasser wird solange mit Cyclopentan versetzt, bis eine Phasentrennung zu verzeichnen ist. Diese Menge wird als Grenzkonzentration der Löslichkeit in der jeweiligen Polyolabmischung bezeichnet.

Die beispielhaften Polyolabmischungen bestehen jeweils 95 g Grundpolyol, 1 g Aktivator (Dimethylyclohexylamin), 2 g Stabilisator B 8421 (Goldschmidt AG) und 2 g Wasser.
- Polyol 1 (Vergleich) :: Polyol auf Basis von Sucrose, Propylenglykol, Wasser, Propylenoxid mit mittlerem Mole- kulargewicht von 850
- Polyol 2 (Vergleich) :: Polyol auf Basis Trimethyolpropan und Propylenoxid mit mittlerem Molekulargewicht von 440
- Polyol 3 (Vergleich) :: Polyol auf Basis Sorbit, Propylenglykol, Propylenoxid mit mittlerem Molekulargewicht von 750
- polyol 4 (Vergleich) :: Polyesterpolyol auf Basis Phthalsäureanhydrid, Sorbit, Diethylenglykol und Ethylenoxid mit mittlerem Molekulargewicht von 650
- Polyol 5 (Erfindung) :: Polyol auf Basis von Ethylendiamin, Propylenoxid mit mittlerem Molekulargewicht von 480
- Polyol 6 (Erfindung) :: Polyol auf Basis von Ethylendiamin, Propylenoxid mit mittlerem Molekulargewicht von 360
- Polyol 7 (Erfindung) :: Polyol auf Basis von Triethanolamin und Propylenoxid mit mittlerem Molekulargewicht vo

### Löslichkeit von Cyclopentan [g]

| | |
|---|---|
| Polyol 1 | 6 |
| Polyol 2 | 13 |
| Polyol 3 | 2 |
| Polyol 4 | 4 |
| Polyol 5 | > 30 |
| Polyol 6 | > 30 |
| Polyol 7 | > 30 |

Die erfindungsgemäßen Beispiele 5 bis 7 zeigen, daß die löslichen Mengen von Cyclopentan im Polyol gegenüber den Vergleichsbeispielen 1 bis 4 deutlich gesteigert werden konnten.

Je höher die lösliche Menge des Treibmittels im Polyol, um so höher ist sein Anteil im Zellgas des darauf gefertigten Hartschaumstoffes und um so geringer ist damit auch die Wärmeleitzahl.

## Patentansprüche

1. Verwendung von
1. mindestens zwei gegenüber Isocyanaten aktive Wasserstoffatome aufweisenden Polyethern vom Molekulargewicht 150 bis 1.500, die im Molekül ein tertiäres Stickstoffatom aufweisen und durch Umsetzung von Triethanolamin oder Ethylendiamin mit Propylenoxid und/oder Ethylenoxid erhalten worden sind, zur Erhöhung der Löslichkeit von reinen Kohlenwasserstoffen in der Polyolkomponente bei der Herstellung von harten Polyurethanschaumstoffen durch Umsetzung mit
2. Polyisocyanaten in Gegenwart von
3. reinen Kohlenwasserstoffen als Treibmittel sowie gegebenenfalls in Gegenwart von
4. weiteren an sich bekannten Hilfs- und Zusatzstoffen.

2. Verwendung gemäß Anspruch 1, **dadurch gekennzeichnet, dass** die Komponente 1) ein Polyether mit einem Molekulargewicht von 250 bis 500 ist.

3. Verwendung gemäß Anspruch 1 oder 2, **dadurch gekennzeichnet, dass** als Treibmittel Cyclopentan verwendet wird.

4. Verwendung gemäß Anspruch 1 oder 2, **dadurch gekennzeichnet, dass** als Treibmittel n- und/oder i-Pentan verwendet wird.

5. Verwendung gemäß Anspruch 1 oder 2, **dadurch gekennzeichnet, dass** als Treibmittel 2,2-Dimethylbutan verwendet wird.

6. Verwendung gemäß Anspruch 1 oder 2, **dadurch gekennzeichnet, dass** als Treibmittel Gemische aus n-, i-Pentan und/oder Cyclopentan und/oder Cyclohexan verwendet werden.

## Claims

1. The use of
1. polyethers of a molecular weight of from 150 to 1500, having at least two hydrogen atoms active to isocyanates and which contain one tertiary nitrogen atom in the molecule and which have been obtained by reacting triethanolamine or ethylenediamine with propylene oxide and/or ethylene oxide, for increasing the solubility of pure hydrocarbons in the polyol component during the production of rigid polyurethane foams by reaction with
2. polyisocyanates in the presence of
3. pure hydrocarbons as blowing agents and optionally in the presence of
4. other auxiliary substances and additives known per se.

2. The use according to claim 1, **characterised in that** component 1) is a polyether having a molecular weight of from 250 to 500.

3. The use according to claim 1 or 2, **characterised in that** cyclopentane is used as blowing agent.

4. The use according to claim 1 or 2, **characterised in that** n-pentane and/or i-pentane is used as blowing agent.

5. The use according to claim 1 or 2, **characterised in that** 2,2-dimethylbutane is used as blowing agent.

6. The use according to claim 1 or 2, **characterised in that** mixtures of n-pentane, i-pentane and/or cyclopentane and/or cyclohexane are used as blowing agent.

## Revendications

1. Utilisation de
1. des polyéthers contenant au moins deux atomes d'hydrogène actifs à l'égard des isocyanates, de poids moléculaire 150 à 1 500, qui contiennent dans la molécule un atome d'azote tertiaire et qui ont été obtenus par réaction de la triéthanolamine ou de l'éthylènediamine avec l'oxyde de propylène et/ou l'oxyde d'éthylène, en vue d'accroître la solubilité des hydrocarbures purs dans le composant polyol à la préparation de mousses rigides de polyuréthane par réaction avec
2. des polyisocyanates en présence de
3. des hydrocarbures purs qui servent d'agents porogènes et le cas échéant en présence de
4. d'autres produits auxiliaires et additifs connus en soi.

2. Utilisation selon la revendication 1, **caractérisée en ce que** le composant 1 est un polyéther de poids moléculaire 250 à 500.

3. Utilisation selon la revendication 1 ou 2, **caractérisée en ce que** l'agent porogène utilisé est le cyclopentane.

4. Utilisation selon la revendication 1 ou 2, **caractérisée en ce que** l'agent porogène utilisé est le n- et/ou l'iso-pentane.

5. Utilisation selon la revendication 1 ou 2, **caractérisée en ce que** l'agent porogène utilisé est le 2,2-diméthylbutane.

6. Utilisation selon la revendication 1 ou 2, **caractérisée en ce que** l'agent porogène utilisé consiste en des mélanges de n-, d'iso-pentane et/ou de cyclopentane et/ou de cyclohexane.
